# FASCICULE DE BREVET EUROPEEN

(11) **EP 0 581 710 B1**
(45) Date de publication et mention de la délivrance du brevet: **30.09.1998**
(21) Numéro de dépôt: 93460023.0
(22) Date de dépôt: 21.07.1993
(51) Int. Cl.: C02F 3/06, C02F 3/12

(54) **Dispositif de type goulotte pour le lavage de filtres dans le traitement biologique des eaux**
Spülwasserabzugsrinne für Filterspülung in biologischer Wasserbehandlung
Wash-water trough for washing filters in biological water treatment

(30) Priorité: 31.07.1992 FR 9209564
(43) Date de publication de la demande: 02.02.1994
(73) Titulaire: OTV Omnium de Traitements et de Valorisation, 94417 St Maurice Cédex (FR)
(72) Inventeur: Cuvellier, Serge, F-91260 Juvisy Sur Orge (FR); Martiel, Philippe Henri, F-95450 Vigny (FR); Desbos, Gilbert Jean-Paul, F-78600 Maisons Laffitte (FR)
(74) Mandataire: Vidon, Patrice

(56) Documents cités:
- EP-A- 0 090 450
- EP-A- 0 213 012
- DE-B- 1 072 969
- FR-A- 2 583 406
- GB-A- 2 118 452
- US-A- 4 478 726
- US-A- 4 746 431

## Description

La présente invention a trait au domaine du lavage des filtres à matériaux granuleux pour le traitement biologique des eaux et concerne plus spécialement un dispositif de collecte et d'évacuation des eaux de lavage.

Au cours des opérations de traitement biologique des eaux effectuées sur des filtres à matériaux granuleux, les matières en suspension, contenues dans l'eau à traiter, sont retenues au-dessus du massif filtrant, et l'eau épurée est recueillie en aval du filtre. Cependant, une certaine quantité de matières polluantes, de dimensions plus faibles, passe au travers du massif filtrant, venant se loger dans l'intergrain, et entraînant de ce fait une diminution progressive du rendement du filtre. D'où la nécessité de recourir à des opérations de lavage de manière périodique.

Jusqu'à présent, la technique préconisée dans le lavage des filtres susvisés, utilisés sur les stations de traitement des eaux, consiste généralement en l'envoi simultané d'air et d'eau à grands débits au travers du filtre.

Ainsi, les fortes vitesses des fluides désorganisent les empilements de grains, et les matières en suspension contenues dans l'eau à traiter, qui se sont accumulées dans la porosité des intergrains au cours des filtrations successives et ont provoqué le bouchage des filtres, sont alors détachées et chassées du massif filtrant par entrainement au moyen de l'eau de lavage.

Cette technique présente cependant de nombreux inconvénients :

Dans le cas où le massif filtrant est constitué de matériaux granuleux d'assez grande densité, comme par exemple du sable, ce procédé s'avère trop coûteux, et ne peut être mis en oeuvre, car il exigerait des débits d'eau trop importants afin de désorganiser les empilements de grains.

Lorsque le filtre est constitué de matériaux de faible densité de type : argile, schiste, anthracite, ponce, ou équivalent, les grains, de par leur légèreté, ont tendance à être soulevés directement par les bulles d'air et sont alors facilement entraînés avec les matières accumulées dans les intergrains par l'eau de lavage, ceci aboutissant alors à une perte de matériau filtrant.

Afin de réduire cette perte de matériaux, des variantes ont été développées, consistant à injecter l'eau et l'air successivement au sein du massif filtrant, puisqu'aucun des deux fluides seul n'est capable d'entrainer les grains de matériaux ; ou bien encore à limiter la durée d'envoi simultanée des deux fluides.

Cependant ces méthodes ne garantissent pas un lavage complet de matériàux et donnent lieu à un rendement insuffisant du filtre.

Une alternative à cette technique d'envoi d'air et eau au travers du massif filtrant, consiste à placer en aval du filtre une grille de dimension de maille inférieure au diamètre des grains du filtre, afin de les retenir lors du lavage.

Cependant cette technique est limitée du fait que l'eau de lavage du filtre à la sortie est toujours chargée de particules s'étant accumulées dans les intergrains, au cours des filtrations successives ; l'accumulation de ces particules sur la grille entrainant rapidement un colmatage de celle-ci.

Dans le but d'obvier aux séries d'inconvénients précités et d'assurer un lavage et une regénération de filtre à matériau granulaire sans perte de grains, l'invention propose un dispositif de collecte et d'évacuation des eaux du lavage du filtre, ayant la conformation générale d'une goulotte assujettie sur le filtre, de ledit filtre étant régénéré par un mouvement ascendant du fluide de lavage, caractérisé en ce que :
- ladite goulotte (1) est de forme prismatique, le sommet du prisme étant dirigé vers le haut et ouvert de manière à permettre le déversement de l'eau à l'intérieur de la goulotte,
- les faces latérales (4,4') du prisme formant un angle alpha de 45 à 70 degrés par rapport à l'horizontale et munies chacune sur leur face extérieure :
   i) d'un déversoir d'eau (5, 5') formant un angle par rapport à l'horizontale et
   ii) d'un déflecteur (6, 6') faisant office de chicane pour canaliser le flux d'eau, lesdits déflecteurs dépassant du bord supérieur dudit déversoir et étant intercalés entre lesdits déversoirs (5, 5') et lesdites faces latérales,
- entre chaque face latérale (4, 4') et l'extrémité inférieure du déversoir (5, 5') correspondant à ladite face est ménagé une ouverture permettant le recyclage du matériau granulaire vers le filtre (3).

On notera qu'il était déjà connu dans l'état de la technique différents dispositifs de type goulotte, tels que ceux décrits dans la demande de brevet britannique GB-A-2118452 et dans le brevet américain US-A-4746431. Toutefois, de tels dispositifs, de par leur structure ne permettent pas de tranquiliser suffisamment le flux d'eau avant que celui-ci ne rencontre le déversoir et conduisent à une mauvaise décantation des matériaux granuleux contenus dans les eaux parvenant à de tels dispositifs.

Conformément à une réalisation particulièrement avantageuse, le premier déversoir d'eau est muni à son extrémité inférieure d'une bavette souple et mobile assurant une action de clapet.

En outre, selon un autre perfectionnement, les bords supérieurs de la goulotte sont repliés de façon à constituer un second déversoir pour l'eau du lavage.

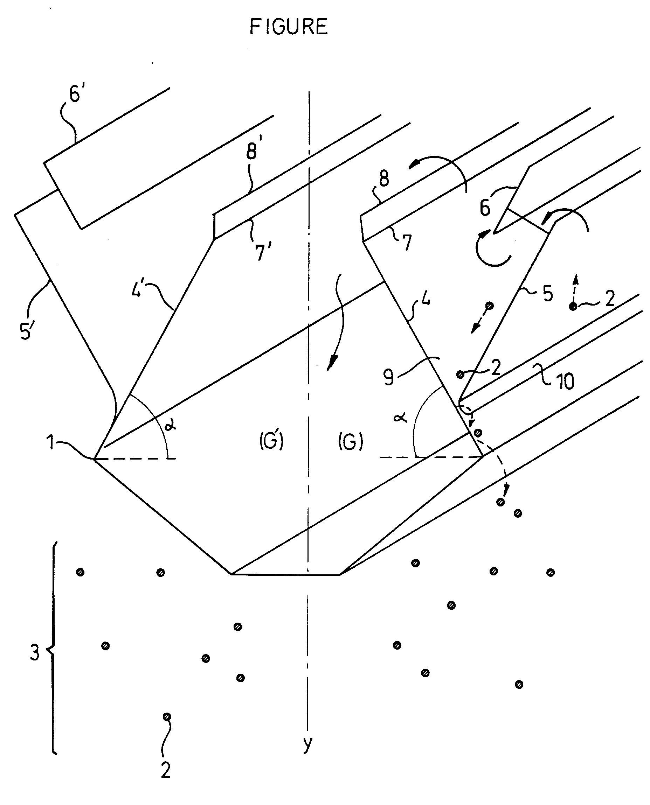

D'autres caractéristiques de l'invention apparaîtront dans la description qui suit, relative à un mode de réalisation non limitatif et illustré par la figure unique annexée où le dispositif de collecte et d'évacuation des eaux de lavage selon l'invention a la conformation générale d'une goulotte (1). Celle-ci est placée lors du lavage du filtre au dessus du matériau granuleux (2) constituant le filtre (3).

Comme on peut le voir sur la figure, la goulotte a une forme polyédrique de type prisme dont les faces latérales (4, 4') forment un angle α de 45 à 70 degrés par rapport à l'horizontale. Selon un mode de réalisation préférentiel, les faces latérales forment un angle de 60° degrés par rapport à l'horizontale. Les faces latérales de la goulotte sont munies chacune d'un premier déversoir d'eau (5, 5') faisant face à un deflecteur (6, 6') constituant une chicane. Les bords supérieurs (7, 7') de la goulotte sont avantageusement repliés avec une inclinaison variable pour constituer un second déversoir (8, 8'). Le premier déversoir d'eau (5) est orienté préférentiellement selon une direction orthogonale par rapport aux faces latérales de ladite goulotte. De par sa configuration prismatique, la goulotte est construite de manière symétrique autour de l'axe central XX' et est ainsi constituée de deux demi-goulotte G, G'. Dans la suite de la description, on se limitera à décrire le trajet de l'eau dans la demi-goulotte G, symbolisé par la flèche sur la figure annexée. Lors de la mise en oeuvre de la phase de lavage, les fluides eau et air sont envoyés selon une direction ascendante au travers du filtre (3).

Les grains de matériaux (2) constituant le filtre (3) sont désempilés à la force des bulles d'air, et le flux d'eau entraîne alors les matières contenues dans l'espace intergrains, ainsi que quelques grains de matériau dans la direction du premier déversoir d'eau (5). Le flux d'eau après avoir atteint le seuil du premier déversoir (5), s'écoule en aval de celui-ci. Les turbulences de l'eau sont alors limitées au moyen du déflecteur (6) formant une chicane sur le trajet du flux.

Selon un mode de réalisation préférentiel, le déflecteur est constitué d'une plaque lisse. Il peut également revêtir l'aspect d'une grille dont la taille des mailles est adaptée aux dimensions des grains de matériau à retenir. De manière avantageuse, il peut être constitué d'une empilement de plaques ou d'un profil formant un conduit en nid d'abeilles. L'orientation du déflecteur (6) est variable. Selon un mode de réalisation avantageux il est placé selon une direction parallèle par rapport au premier déversoir d'eau (5).

Le flux d'eau butant contre la chicane est ralenti et canalisé dans une zone de tranquilité (9) délimitée par la face latérale inclinée (4) de la goulotte.

L'eau s'accumule ensuite dans cette zone et les bulles d'air remontent à la surface de l'eau pour s'évaporer à l'atmosphère.

Les grains de matériau filtrant (2), entrainés par le flux d'eau, sont également recueillis dans la zone de tranquilité (9) et de par l'inclinaison de celle-ci, glissent le long de la face latérale (4) de la goulotte jusqu'à l'extrémité inférieure du premier déversoir (5).

Comme on peut le visualiser sur la figure, l'extrémité inférieure du premier déversoir (5) peut avantageusement être munie d'une bavette mobile (10), jouant le rôle de clapet. Les grains (2) de par leur propre poids soulèvent la bavette et retournent dans la masse de matériau granuleux constituant le filtre (3).

En pratique, la bavette est constituée d'une matière assurant une bonne souplesse et facilitant le passage des grains. Elle est choisie en fonction de la taille et la densité des grains de matériau constituant le filtre.

Selon un mode avantageux de réalisation, elle est constituée de matière plastique choisie parmi des polymères, copolymères ou élastomères présentant une bonne résistance aux produits chimiques et notamment à l'ozone.

Selon une variante de réalisation, la bavette peut également être constituée d'un matériau rigide, et articulée au moyen d'un système de type flotteur ou vérin de commande, afin de permettre le passage des grains.

L'eau dans la zone tranquille suit un trajet ascendant et atteint le seuil le second déversoir (8), et est évacuée en aval de celui-ci dans ladite goulotte.

Pour finir, on indiquera que le dispositif selon l'invention peut être utilisé aussi bien sous la forme de goulotte que de demi-goulotte positionnée sur les bords opposés de la partie supérieure du filtre.

Le dispositif selon la présente invention peut être utilisé, aussi bien dans le lavage des filtres adaptés au traitement des eaux usées en lit fixe ou fluidisé ou au traitement d'épuration des eaux à potabiliser.

## Revendications

1. Dispositif de collecte et d'évacuation des eaux de lavage d'un filtre à matériaux granuleux pour le traitement biologique des eaux et ayant le conformation générale d'une goulette (1) assujettie au-dessus du filtre (3), ledit filtre étant régénéré par un mouvement ascendant du fluide de lavage,
caractérisé en ce que :
- ladite goulotte (1) est de forme prismatique, le sommet du prisme étant dirigé vers le haut et ouvert de manière à permettre le déversement de l'eau à l'intérieur de la goulotte,
- les faces latérales (4, 4') du prisme formant un angle alpha de 45 à 70 degrés par rapport à l'horizontale et munies chacune sur leur face extérieure :
i) d'un déversoir d'eau (5, 5') formant un angle par rapport à l'horizontale et
ii) d'un déflecteur (6, 6') faisant office de chicane pour canaliser le flux d'eau, lesdits déflecteurs dépassant du bord supérieur dudit déversoir et étant intercalés entre lesdits déversoirs (5, 5') et lesdites faces latérales,
- entre chaque face latérale (4, 4') et l'extrémité inférieure du déversoir (5, 5') correspondant à ladite face est ménagé une ouverture permettant le recyclage du matériau granulaire vers le filtre (3).

2. Dispositif selon la revendication 1, caractérisé en ce que les faces latérales (4, 4') de la goulotte forment un angle α voisin de 60 degrés par rapport à l'horizontale.

3. Dispositif selon l'une quelconque des revendications 1 ou 2, caractérisé en ce que les bords supérieurs (7, 7') de la goulotte sont repliés avec une inclinaison pour constituer un second déversoir (8, 8').

4. Dispositif selon l'une quelconque des revendications 1 à 3, caractérisé en ce que ladite ouverture est munie d'une bavette (10) mobile et souple .

5. Dispositif selon l'une quelconque des revendications 1 à 4, caractérisé en ce que le déflecteur (6) est constitué d'au moins une plaque lisse.

6. Dispositif selon l'une quelconque des revendications 1 à 4, caractérisé en ce que le déflecteur (6) est constitué d'une grille.

7. Dispositif selon la revendication 4, caractérisé en ce que la bavette (10) est constituée de matière plastique.

## Claims

1. Device for collecting and removing wash waters from a filter containing granular material for the biological treatment of water and having the general form of a chute (1) firmly fixed above the filter (3), the said filter being regenerated by an ascending movement of the wash liquid,
characterized in that :
- the said chute (1) has a prismatic shape, the top of the prism being directed upwards and being open so as to enable water to be poured into the chute,
- the lateral faces (4, 4') of the prism forming an angle alpha of 40 to 75 degrees with respect to the horizontal and being provided on each of their outer faces with :
i) a water discharge outlet (5, 5') forming an angle with respect to the horizontal and
ii) a deflector (6, 6') acting as a baffle to channel the flow of water, the said deflectors projecting beyond the upper edge of the said discharge outlet and being inserted between the said discharge outlets (5, 5') and the said lateral faces,
- an opening is provided between each lateral face (4, 4') and the lower end of the discharge outlet (5, 5') corresponding to the said face, enabling the granular material to be recycled to the filter (3) .

2. Device according to claim 1, characterized in that the lateral faces (4, 4') of the chute form an angle α of approximately 60 degrees with respect to the horizontal.

3. Device according to either of claims 1 or 2, characterized in that the upper edges (7, 7') of the chute are folded into an incline to constitute a second discharge outlet (8, 8') .

4. Device according to any one of claims 1 to 3, characterized in that the said opening is provided with a movable flexible flap (10).

5. Device according to any one of claims 1 to 4, characterized in that the deflector (6) consists of at least one smooth plate.

6. Device according to any one of claims 1 to 4, characterized in that the deflector (6) consists of a mesh.

7. Device according to claim 4, characterized in that the flap (10) consists of a plastic material.

## Patentansprüche

1. Sammel- und Abflußvorrichtung für das Waschwasser eines mit körnigen Materialien betriebenen Filters für die biologische Abwasserbehandlung, welche die allgemeine Form einer Ablaufrinne (1) hat, die oberhalb des Filters (3) befestigt ist, wobei der Filter durch eine Aufwärtsbewegung des Waschwassers regeneriert wird,
dadurch gekennzeichnet, daß:
- die Ablaufrinne (1) einen Prismenquerschnitt aufweist, wobei der Scheitel des Prismas oben liegt und offen ist, so daß das Wasser in das Innere der Rinne laufen kann,
- die Seiten (4, 4') des Prismas einen Winkel alpha von 45 bis 70 Grad mit der Horizontale bilden und jeweils auf der äußeren Fläche folgendes aufweisen:
i) einen Wasserüberlauf (5, 5'), der mit der Horizontalen einen Winkel bildet und
ii) Ablenkbleche (6, 6') zum Kanalisieren des Wasserflusses, wobei diese Ablenkbleche über den höheren Rand des Wasserüberlaufes hinausragen und zwischen den Wasserüberläufen (5, 5') und den Seitenwänden eingefügt sind,
- zwischen jeder Seite (4, 4') und dem unteren Ende des der Jeweiligen Seite entsprechenden Wasserüberlaufes (5, 5') sich eine Öffnung befindet, die das Zurückführen des körnigen Materials zum Filter (3) ermöglicht.

2. Vorrichtung gemäß Anspruch 1,
dadurch gekennzeichnet, daß die Seiten (4, 4') der Ablaufrinne einen Winkel α von etwa 60 Grad mit der Horizontalen bilden.

3. Vorrichtung gemäß einem der Ansprüche 1 oder 2,
dadurch gekennzeichnet, daß die oberen Ränder (7, 7') der Ablaufrinne mit einer gegebenen Neigung gebogen sind, um einen zweiten Überlauf (8, 8') zu bilden.

4. Vorrichtung gemäß einem der Ansprüche 1 bis 3,
dadurch gekennzeichnet, daß die Öffnung mit einer beweglichen, biegsamen Spritzklappe (10) ausgestattet ist.

5. Vorrichtung gemäß einem der Ansprüche 1 bis 4,
dadurch gekennzeichnet, daß das Ablenkblech (6) aus mindestens einer glatten Platte besteht.

6. Vorrichtung gemäß einem der Ansprüche 1 bis 4,
dadurch gekennzeichnet, daß das Ablenkblech (6) aus einem Gitter besteht.

7. Vorrichtung gemäß Anspruch 4,
dadurch gekennzeichnet, daß die Spritzklappe (10) aus Kunststoff ist.
